Europäisches Patentamt

European Patent Office

Office européen des brevets

(11) Veröffentlichungsnummer: **0 201 702**
**A2**

(12) # EUROPÄISCHE PATENTANMELDUNG

(21) Anmeldenummer: 86104335.4

(22) Anmeldetag: 29.03.86

(51) Int. Cl.⁴: **C09D 3/727** , C08L 23/08 , C08L 33/02

(30) Priorität: 06.04.85 DE 3512564
04.07.85 DE 3523860

(43) Veröffentlichungstag der Anmeldung:
20.11.86 Patentblatt 86/47

(84) Benannte Vertragsstaaten:
AT BE CH DE FR GB IT LI NL SE

(71) Anmelder: BASF Aktiengesellschaft
Carl-Bosch-Strasse 38
D-6700 Ludwigshafen(DE)

(72) Erfinder: Ziegler, Walter, Dr.
Starenweg 15
D-6803 Edingen-Neckarhausen(DE)
Erfinder: Dietsche, Wolfram, Dr.
Albrecht-Dürer-Ring 34 b
D-6710 Frankenthal(DE)
Erfinder: Weiss, Stefan, Dr.
Carl-Beck-Strasse 46
D-6903 Neckargemünd(DE)
Erfinder: Müller, Richard, Dr.
Sonnenwendstrasse 33
D-6702 Bad Dürkheim(DE)
Erfinder: Hettche, Albert, Dr.
Kleiststrasse 12
D-6717 Hessheim(DE)
Erfinder: Glaser, Klaus
Neuweg 14
D-6704 Mutterstadt(DE)
Erfinder: Vamvakaris, Christos, Dr.
Riedweg 6
D-6701 Kallstadt(DE)

(54) Wässrige Wachsdispersionen als Konservierungsmittel für Metall- und Lackoberflächen, ihre Verwendung und ein Verfahren zum Konservieren von Metall- und Lackoberflächen.

(57) Die Erfindung betrifft ein flüssiges Konservierungsmittel für ggf. galvanisierte Metall -und Lackoberflächen in Form von wäßrigen Wachsdispersionen, die ein spezielles Ethylen-Acrylsäure-Copolymerisatwachs, bestehend aus 8 bis 25 Gew.-% Acrylsäure - und 92 bis 75 Gew.-% Ethyleneinheiten in teilweise oder vollständig neutralisierter Form gegebenenfalls in Mischungen mit Polyethylenoxidat- und/oder Kohlenwasserstoffwachsen enthalten, die Verwendung dieses speziellen Ethylen-Acrysäure-Copolymerisatwachses für Konservierung von ggf. galvanisierten Metal-und Lackoberflächen sowie ein Verfahren zum temporären Konservieren von Metall - und Lackoberflächen.

Rank Xerox

Wäßrige Wachsdispersionen als Konservierungsmittel für Metall-und Lackoberflächen, ihre Verwendung und ein Verfahren zum Konservieren von Metall-und Lackoberflächen

Die Erfindung betrifft ein flüssiges Konservierungsmittel für ggf. galvanisierte Metall-und Lackoberflächen auf der Basis eines in Wasser dispergierten teilweise oder vollständig neutralisierten speziellen Ethylen-Acrylsäure-Copolymerisatwachses, gegebenenfalls in Mischung mit anderen Wachsen, dessen Verwendung als Konservierungsmittel ·für ggf. galvanisierte Metall-und Lackoberflächen und ein Verfahren zum Konservieren dieser Oberflächen.

Konservierungsmittel für den zwischenzeitlichen Schutz von Metalloberflächen werden insbesondere in der Automobilindustrie verwendet. Diese sollen die lackierten Metallteile der Karosserie eines Automobiles für die Zeitspanne zwischen Produktion und Übergabe an den Kunden vor schädlichen Umwelteinflüssen und Beschädigungen beim Transport schützen. Voraussetzung ist, daß die verwendeten Konservierungsmittel nicht selbst einen negativen Einfluß insbesonsere auf den Lack ausüben und daß sie nach Erfüllung ihrer Aufgabe in einfacher Weise wieder entfernt werden können. Als galvanisierte Metalloberflächen werden insbesondere Zinkoberflächen verwendet. Hier sollen die verwendeten Konservierungsmittel nicht selbst einen negative Einfluß insbesonder auf Zinkoberflächen, wie Veränderungen im Glanz oder Duktilität, ausüben.

Bisher gebräuchliche Systeme, wie das der Deutschen Patentschrift 1 669 155 aus gegebenenfalls mit alkali-oder erdalkali-neutralisierten Wachssäuren im Gemisch mit Paraffinen, Polyolefinwachsen oder Ozokeriten haben teilweise den Nachteil, daß sie in organischen Lösungsmitteln gelöst oder dispergiert zur Anwendung kommen. Die Lösungsmittel,insbesondere Benzin, verdunsten und gelangen so in die Umwelt, was einen gravierenden Nachteil darstellt. Man hat deshalb - schon versucht, die organischen Lösungsmittelsysteme durch wäßrige Systeme zu ersetzen. Dies ist z.B. gemäß der DE-AS 12 27 592 nur zum Teil gelungen. Der Lösungsmittelanteil kann zwar reduziert, aber nicht ganz beseitigt werden.

Andere Systeme, die ohne organische Lösungsmittel auskommen, wie z.B. das wasserhaltige flüssige Konservierungsmittel gemäß der DE-OS 29 26 197, das eine Mischung von Säuren oder Esterwachsen auf Basis von Montanwachsen, von Natur-und Kohlenwasserstoffwachsen mit einem basischen Verseifungsmittel, z.B. Alkalihydroxide oder Ethanolamine, darstellt, kommen nicht ohne Emulgatoren aus, die unter Umständen den Nachteil haben, daß sie aus der Schutzschicht herausdiffundieren, wobei sie vor allem bei längerer Verweildauer und bei höheren Temperaturen auch einen negativen Einfluß auf den Lack ausüben. Auch greifen u.U. die verwendeten Alkalihydroxide bekanntlich die Lackoberflächen frisch lackierter Metallgegenstände an.

In der DE-OS 15 19 220 werden zum Schutze von Metalloberflächen Wachsgemische, die wasserlösliche Acrylpolymerisate enthalten können, beschrieben. Die darin beschriebene Lösung des Problems ist nicht optimal, weil die verwendeten wasserlöslichen Polymeren unter Bewitterungsbedingungen keinen ausreichenden Schutz erfüllen.

Aufgabe der Erfindung ist es, ein Konservierungsmittel für ggf. galvanisierte Metall-und Lösungsmittel enthält, möglichst ohne Emulgatoren und mit möglichst wenig oder ohne Alkali auskommt und eine niedere Trockentemperatur aufweist. Die zu verwendenden Filmbildner sollen dabei wasserunlöslich, aber in Wasser dispergierbar sein.

Die Lösung der Aufgabe besteht in einem flüssigen Konservierungsmittel für ggf. galvanisierte Metall-und Lackoberflächen in Form von wäßrigen Wachdispersionen, das dadurch gekennzeichnet, ist, daß die wäßrige Wachsdispersion 10 bis 30 Gew.% eines Ethylen-Acrylsäure-Copolymerisatwachses, im folgenden als E-AS-Wachs bezeichnet, bestehend aus 8 bis 25 Gew.% Acrylsäure-und 92 bis 75 Gew.% Ethyleneinheiten, bezogen auf die Säureform des Wachses, und Rest bis zu 100 Gew.% Wasser enthält, wobei das E-AS-Wachs in der Säureform eine Schmelzviskosität von wenigstens 1000 mm²/s, gemessen bei 120°C als untere Grenze und einen MFI-Wert von wenigstens 1, gemessen bei 125°C und 325 g, also obere Grenze des durch die Viskosität charakterisierten Molekulargewichts aufweist und die Carboxylgruppen des E-AS-Wachses zu 50 bis 100 Mol% neutralisiert sind, 0,1 bis 5 Gew.% an sich übliche Hilfsmittel außer Emulgatoren zugesetzt sind.

Mit dem oben definierten speziellen E-AS-Wachs kann eine rein wäßrige, emulgatorfreie Dispersion mit hervorragenden Anwendungseigenschaften hergestellt werden. Insbesondere eignet sich die erfindungsgemäße Dispersion für die Konservierung von lackierten Metallflächen von Automobilen, LKW's und landwirtschaftlichen Nutzfahrzeugen sowie von galvanisierten Zinkoberflächen, wie verzinke Werkzeugteile, Werksstücke oder Gebrauchsgegenstände. Die besondere Eignung beruht auf dem ausgewogenen hydrophilen/hydrophoben Charakter des E-AS-Wachses.

Während bei der Konservierung allgemein von Metalloberflächen, insbesondere lackierten Oberflächen Wert auf eine leichte Entfernbarkeit der Schutzfilme gelegt wird, steht bei den galvanisierten Oberflächen ein Dauerschutz im Vordergrund.

Unter galvanisierten Oberflächen sind Metalloberflächen, beispielsweise des Eisens und Stahls sowie ihre Legierungen und des Kupfers, zu verstehen, auf denen insbesondere Nickel, Kupfer und Zink galvanisch abgeschieden worden sind. Galvanisierte Zinkoberflächen als bevorzugt zu behandelnde Oberflächen sind solche, die mit Hilfe eines dem Fachmann bekannten sauren oder alkalischen Zinkbades auf beispielsweise Eisen oder Stahl abgeschieden und gegebenenfalls chromatiert worden sind.

Erfindungsgemäß sind E-AS-Wachse, bestehend aus 12 bis 22 Gew.% Acrylsäure und 88 bis 72 Gew.% Ethylen, bevorzugt.

Bevorzugt sind 65 bis 100 Mol% der vorhandenen Carboxylgruppen neutralisiert.

Die Carboxylgruppen des erfindungsgemäß zu verwendenden Wachses sind teilweise oder vollständig neutralisiert durch Ammoniak oder wenigstens ein aliphatisches, gegebenfalls durch eine oder mehrere Hydroxygruppen substituiertes Alkylamin. Als Alkylamine kommen insbesondere in Betracht mono-, Di-oder Trialkanolamine mit 1 bis 10, bevorzugt 2 bis 6, C-Atomen im Hydroxyalkylrest, und 1 bis 6 C-atomen im Alkylrest. Selbstverständlich können auch Mischungen der genannten Basen verwendet werden. Von den substituierten Aminen seien im einzelnen beispielsweise genannt Diethanolamin, Triethanolamin, Triisopropylamin, 2-Amin-2-methylpropanol, Dimethylethanolamin und Diethylethanolamin. Dabei können bis zu 30 % der vorhandenen Carboxylgruppen durch ein Alkalihydroxid, insbesondere Natrium-oder Kaliumhydroxid, neutralisiert sein.

Besonders bevorzugt sind die Carboxylgruppen durch Ammoniak oder ein Dimethyl-oder Diethylethanolamin und ihre Mischungen mit Ammoniak neutralisiert, im Falle von galvanisierten Metalloberflächen besonders bevorzugt mit Dimethylethanolamin, Diethylethanolamin und Triethanolamin und ihren Mischungen.

Es wird darauf hingewiesen, daß sich die in den erfindungsgemäßen Wachsdispersionen enthaltene Menge E-AS-Wachs aus praktischen Gründen auf die Säureform des E-AS-Wachses bezieht, obwohl tatsächlich ein teilweise bis vollständig neutralisiertes Wachs verwendet wird. Angaben, die sich auf den Feststoffgehalt oder Trockengehalt der Dispersionen beziehen, schließen natürlich die zur Neutralisation verwendeten Basen mit ein, soweit nicht ausdrücklich anders vermerkt wird.

Da für die erfindungsgemäß verwendeten E-AS-Wachse eine exakte Molekulargewichtsbestimmung unter Umständen außerordentlich aufwendig ist, bedient man sich zur Vereinfachung statt der Charekterisierung durch Molekulargewichte bzw. Molekulargewichtsbereiche der Viskosität, und zwar gemessen in geschmolzener Form als Schmelzviskosität oder als MFI-Wert. Diese Viskositäten kennzeichnen dem Fachmann aussagekräftige und praxisgerechte Werte.

Es wird ausdrücklich darauf hingewiesen, daß die Viskositäten an den E-AS-Wachsen in der Säureform und nicht an den teilweise oder vollständig neutralisierten Wachsen gemessen werden.

Die Schmelzviskosität wird bevorzugt bei den niedermolekularen Produkten gemäß der DGF-Einheitsmethode C-IV 7 (68) im Kapillarviskosimeter bestimmt, wobei eine Schmelze von 120°C durch eine Kapillare läuft und die Zeit des Durchlaufes gemessen wird.

Niedrige Schmelzviskositätswerte entsprechen niederen Molekulargewichten, höhere Schmelzviskositäten höheren Molekulargewichten Die erfindungswesentlichen Schmelzviskositätswerte betragen, gemessen bei 120°C, wenigstens 1000 mm²/s, vorzugsweise 2000 mm²/s bis 15 000 mm²/s.

Hohe Schmelzviskositäten von über 12000 bis 15000 mm²/s werden zunehmend schwieriger meßbar und sind nicht mehr aussagekräftig. Ab bestimmten höheren Molekularwichten der E-AS-Wachse lassen sich die Schmelzviskositäten nicht mehr bestimmen, so daß zur Charakterisierung der oberen Grenze der Molekulargewichtsbereiche zweckmäßigerweise zur Viskositätsbestimmung die MFI-Werte, gemessen bei 125°C und 325 g, herangezogen werden. Größenordungsmäßig entspricht eine Schmelzviskosität von 12000 mm²/s etwa einem MFI-Wert von 190, gemessen bei 125°C und 325 g.

Der MFI-Wert (Melt Flow Index) oder Schmelzindex gibt die Menge Polymerisatschmelze in Gramm an, die bei einer bestimmten Temperatur durch eine Düse von bestimmten Abmessungen bei einem bestimmten Kraftaufwand (Belastung) gedrückt werden kann. Die Bestimmung der Schmelzindices (MFI-Ein-heiten) erfolgt nach folgenden Normvorschriften, die untereinander identisch sind: ASTM D 1238-65 T, ISO R 1133-1696 (E) oder DIN 53 735 (1970).

Ein hoher MFI-Wert deutet auf ein relativ niedriges, ein niedriger MFI-Wert auf ein relativ hohes Molekulargewicht hin.

Die erfindungswesentlichen MFI-Wert liegen in dem Bereich von 600 bis 1, bevorzugt 500 bis 10. Daraus ergibt sich ein MFI-Wert von wenigstens 1 im Hinblick auf das Molekulargewicht als obere Grenze.

Allgemein sei erwähnt, daß das Molekulargewicht des E-AS-Wachses nicht zu hoch sein soll, weil die Wiederentfernbarkeit erschwert werden kann. Ein polymeres E-AS-Wachs mit 17 % Acrylsäure, was einer Säurezahl von 127 entspricht, einer Wachshärte von 350 bis 450 bar, einem Schmelzpunkt von 91 bis 108°C und einem MFI-Wert von 8 ist beispielsweise noch gut geeignet. Zweckmäßiger sind die niedermolekularen Typen mit MFI-Werten von 500 bis 10. Die höhermolekularen E-AS-Wachse, d.h. solche mit kleineren MFI-Werten, sind immer noch anwendbar, jedoch wird ihre Brauchbarkeit zunehmend geringer bzw. die Anforderungen an ihre Verarbeitung unter Wahrung des anwendungstechnischen Niveaus immer höher.

Wie oben angegeben, können der Gesamtmischung außer Emulgatore zweckmäßigerweise an sich übliche Hilfsmittel in Mengen von 0,1 bis 5 Gew.%, bevorzugt 0,5 bis 2 %, bezogen auf die Gesamtmischung, zugesetzt werden.

Hierfür kommen insbesondere in Betracht:

Entschäumer, wie Ethylenoxid/Propylenoxid-Blockpolymere mit 5 bis 50 EO/PO-Einheiten von Fettalkoholen mit 8 bis 20 C-Atomen, Diolen und Triolen, wie Ethylenglykol, und Ethylendiaminen, und zwar vorteilhaft in einer Menge von 0,5 bis 1, bezogen auf die Gesamtmischung,

Verlaufsmittel, wie das Kaliumsalz des N-Ethyl-N-perfluoroctansulfonylglycins, vorteilhaft in einer Menge von 0,1 bis 0,5 Gew.%, bezogen auf die Gesamtmischung, oder auch zusätzliche Korrosionsschutzmittel, wie N-(2-Ethylhexyl)-bernsteinsäurehalbamid, N-2-Ethylhexyl-phthalsaurehalbamid, Phenylsulfonylamidocapronsäure, Diisobutenylbernsteinsäure oder Medialansäure in einer Menge von 0,1 bis 0,5 Gew.,-%, bezogen auf die Gesamtmischung.

In den bevorsugten Ausführungsformen, insbesondere für den zwischenzeitlichen Schutz von Metall-und Lackoberflächen enthält das erfindungsgemäße flüssige Konservierrungsmittel zusätzlich ein Polyethylenoxydatwachs, in diesem Falle zusammen mit einem nichtionischen Emulgator, oder ein synthetisches oder natürliches Kohlenwasserstoffwachs und ihre Mischungen.

Geeignete Polyethylenoxydatwachse sind bekannt und im Handel erhältlich. Sie sind durch eine Säurezahl von 18 bis 25 und ein Molekulargewicht von 2000 (Gewichtsmittel) bis 10 000 charakterisiert.

Unter synthetischen und natürlichen Kohlenwasserstoffwachsen sollen insbesondere die bekannten Polyethylenwachse mit Molgewichten von 500 bis 6000 und einem Schmelzpunkt von 40 bis 110°C sowie natürliches Paraffin mit einem Schmelzpunkt von 40 bis 100°C verstanden werden. Dabei liegt für die genannten Kohlenwasserstoffwachse der bevorzugte Schmelzbereich bei 40 bis 70°C.

In der Praxis werden die zusätzlich verwendeten Polyethylenoxydatwachse und Kohlenwasserstoffwachse häufig in Form einer für diesen speziellen Zweck hergestellten wäßrigen Dispersion einer erfindungsgemäßen Disperson zugesetzt. Es ist aber auch möglich, die zusätzlichen Wachse direkt einzudispergieren.

Insbesonder die Polyethylenoxydatwachse werden zweckmäßigerweise in Form einer wäßrigen Dispersion verwendet, in der die Carboxylgruppen teilweise bis vollständig durch ein Alkalihydroxid, insbesonder Natrium-oder Kaliumhydroxid, neutralisiert sind und die einen nichtionischen Emulgator, wie einen mit 5 bis 100 Ethyloxideinheiten umgesetzten Fettalkohol oder Oxoalkohol mit 10 bis 16 C-Atomen, bevorzugt einen mit ca. 7 Ethyloxideinheiten umgesetzten $C_{10}$-Fettalkohol, enthält.

Eine derartige zuzusetzende Polyethylenoxydatwachsemulsion enthält beispielsweise 20 bis 27 Gew.% eines Polyethylenoxydatwachses einer Säurezahl von 18 bis 25 und einem Molekulargewicht (Gewichtsmittel) von 2000 bis 10 000, 0,5 bis 0,8 Gew.% Alkalihydroxid, insbesondere Natrium-oder Kaliumhydroxid, gegebenenfalls 2,5 bis 2,8 Gew.% eines nichtionischen Emulgators und Rest zu 100 Gew.% Wasser. Hierzu wird erläutert, daß im Falle von Polyethylenoxydatwachsemulsionen die Anwesenheit von Emulgatoren zweckmäßig ist.

Ein bevorzugter Gegenstand der Erfindung ist damit eine Wachsdispersion nach Anspruch 1, der, bezogen auf ihr Gewicht, 15 bis 25 Gew.% einer Emulsion eines Polyethylenoxydatwachses, bestehend aus 20 bis 27 Gew.% eines Polyethylenoxydatwachses mit einer Säurezahl von 18 bis 25 und einem Molekulargewicht (Gewichtsmittel) von 2000 bis 10 000, 0,5 bis 0,8 Gew.% Alkalihydroxid, 2,5 bis 2,8 Gew.% eines nichtionischen Emulgators und Rest zu 100 Gew.% Wasser, zugesetzt sind, mit der Maßgabe, daß die Gesamtdispersion ggf.nach dem Zusatz von Wasser einen Feststoffgehalt von 10 bis 35 Gew.% aufweist.

Ein weiterer bevorzugter Gegenstand der Erfindung ist eine Wachsdispersion nach Anspruch 1, der, bezogen auf ihr Gewicht, 40 bis 80 Gew.% eines synthetischen oder natürlichen Kohlenwasserstoffwachses zugesetzt sind, mit der Maßgabe, daß die Gesamtdispersion ggf. nach Zusatz von Wasser einen Feststoffgehalt von 30 bis 65 Gew.% aufweist.

Eine weitere Ausführungsform der Erfindung liegt darin, daß Mischungen aus den oben angegebenen Polyethylenoxydatwachsen und Kohlenwasserstoffwachsen einer Wachsdispersion nach Anspruch 1 zugesetzt sind.

Das sind Wachsdispersionen nach Anspruch 1, denen, bezogen auf ihr Gewicht, 25 bis 100 Gew.% einer Emulsion eines Polyethylenoxydatwachses, bestehend aus 20 bis 27 Gew.% eines Polyethylenoxydatwachses mit einer Säurezahl von 18 bis 25 und einem Molekulargewicht - (Gewichtsmittel) von 2000 bis 10 000, 0,5 bis 0,8 Gew.% Alkalihydroxid, 2,5 bis 2,8 Gew.% eines nichtionischen Emulgators und Rest zu 100 % Wasser, und 15 bis 200 Gew.% eines synthetischen oder natürlichen Kohlenwasserstoffwachses zugesetzt sind, mit der Maßgabe, daß die Gesamtdispersion ggf. nach Zusatz von Wasser einen Feststoffgehalt von 30 bis 65 Gew.% aufweist.

Die angegebenen Feststoffgehalte von 10 bis 35 bzw. 30 bis 65 Gew.-% für die Gesamtdispersionen entsprechen den für eine praktische Anwendung zweckmäßigen Gehalten. Sie werden ggf. durch Zusatz von Wasser auf die gewünschten Gehalte eingestellt.

Gegenstand der Erfindung ist auch die Verwendung von E-AS-Wachsen in Form der oben definierten Dispersionen für den temporären Schutz von Metall-und Lackoberflächen, wobei die Dispersionen ohne Polyethylenoxydat-und Kohlenwasserstoffwachse zum Schutze von galvanisierten Metalloberflächen, insbesonder von galvanisierten und gegebenenfalls chromatierten Zinkoberflächen besonders bevorzugt sind.

Weiterhin ist Gegenstand der Erfindung ein Verfahren zum temporären Konservieren von ggf. galvanisierten Metall-und Lackoberflächen, das dadurch gekennzeichnet ist, daß die oben definierten wäßrigen Dispersionen in üblicher Weise auf Metall-und Lackoberflächen aufgebracht und anschließend, bevorzugt bei 20 bis 60°C, getrocknet werden.

Der überraschende Vorteil der Erfindung liegt darin, daß sich nach dem Aufbringen und Trocknen eine sehr widerstandsfähige Schutzschict ausbildet, die sich durch eine hohe Wasserfestigkeit, obwohl als rein wäßrige Dispersion mit teilweise oder vollständig neutralisierten Carboxylgruppen aufgebracht worden ist, und nach Erfüllung ihrer Aufgabe durch eine gute Ablösbarkeit auszeichnet.

Untersuchungen haben gezeigt, daß Polyethylenoxydatwachsemulsionen in Abmischung mit Paraffinen, wie aus den Beispielen hervorgeht, für die Praxis nicht geeignet sind, weil die anwendungstechnische Prüfung insbesondere im Hinblick auf die Beständigkeit gegen Kaltwasser nicht befriedigend ist. Daher sind Emulsionen auf der Basis von Polyethylenoxydaten in Abmischung mit den emulgatorfreien erfindungsgemäß zu verwendenden E-AS-Wachsemulsionen zur Verbesserung der Kaltwasserbeständigkeit ein besonderer Gegenstand der Erfindung. Selbstverständlich können die Wachsdispersionen, die zusätzlich Polyethylenoxydatwachse enthalten, zusätzlich noch mit Kohlenwasserstoffwachsen abgemischt werden.

Die Herstellung der erfindungsgemäß zu verwendenen Dispersion erfolgt in einfacher und an sich üblicher Weise. Das E-AS-Wachs als Ausgangsmaterial, häufig in Granulatform vorliegend, wird zweckmäßigerweise mit der erforderlichen Menge Wasser und der entsprechenden Menge Base in einem Emulgier-Autoklaven bei 4 bis 6 bar Druck und Temperaturen von 140 bis 160°C unter Rührer emulgiert.

Gegebenenfalls wird anschließend ein zu verwendendes Kohlenwasserstoffwachs in Form der Schmelze unter starkem Rühren, zweckmäßig mit Hilfe eines Ultraturraxgerätes, bei Temperaturen über dem Schmelzpunkt des Wachses und unter Normaldruck oder ein zu verwendendes Polyethylenoxydatwachs, gegebenenfalls in Form der oben definierten Dispersion eindispergiert. Polyethylenoxydatwachse werden, wie oben angegeben, zweckmäßig in Form einer wäßrigen Dispersion zugegeben.

Eine so hergestellte Dispersion, ggf. mit den oben erwähnten Zusätzen, läßt sich in an sich überlicher Weise und ohne Schwierigkeiten auf die vorgesehenen ggf. galvanisierten Metall-oder Lackoberflächen aufbringen. Die Aufbringung erfolgt beispielsweise durch Airless-Spritzen, mit Hilfe einer Druckpistole, in Form der elektrostatischen Lackierung oder durch Tauchen. Auch ist ein Aufbringen mit Pinsel oder Rolle ohne weiteres möglich. Die anschließende Trocknung erfolgt in der Regel durch Infrarotlicht oder im Luftstrom bei 20 bis 60°C, gegebenenfalls durch Heißluft. Nach der Trocknung werden in der Regel in Abhängigkeit von der aufgetragenen Menge und vom Feststoffgehalt der verwendeten Dispersion Filme von 1-20 μm, bevorzugt 15 bis 20 μm erhalten.

Im Falle der Konservierung von galvanisierten Metalloberflächen werden insbesondere Schichtdicken von 1 bis 10 μm, bevorzugt 2 bis 5 μm erzeugt. Eine Dispersion von einem Feststoffgehalt von 15 Gew.-% und im Tauchverfahren aufgebracht, ergibt z.B. eine Schichtdicke von etwa 3 μm.

Die aufgetragene Schutzschicht läßt sich mit Heißwasser bei Temperaturen von 80 bis 95°C, gegebenenfalls unter Zugabe üblicher Tenside, in einfacher Weise entfernen.

Für die anwendungstechnische Eignung des erfindungsgemäßen Systems sind von Bedeutung: Die Beständigkeit des getrockneten, etwa 15 bis 20 μm dünnen Filmes gegen Kaltwasser und die Entfernbarkeit des Filmes mit Heißwasser von etwa 95°C. Von besonderer Bedeutung ist die Beständigkeit der getrockneten, etwa 1 bis 10 μm dünnen Filme, insbesondere gegen Weißrostkorrosion bei Zinkoberflächen. Die aufgetragenen Filme sind transparent, so daß er optische Eindruck im Hinblick auf Glanz und die Duktilität nicht beeinträchtigt wird.

Zusammenhänge zwischen der Zusammensetzung von erfindunmäßen Dispersionen und den anwendungstechischen Prüfungsergebnissen sind in den folgenden Tabellen zusammengestellt.

Reine Paraffindispersionen sind nicht geeignet, well beding durch den stets erforderlichen Emuylgator die Beständigkeit gegen kaltes Wasser unzureichend ist. Auch die Kombination Paraffin mit der Emulsion eines Polyethylenoxydatwachses ist nicht kaltwasserbeständig, weil Polyethylenoxydate nur mit Emulgatoren und Alkali in eine handhabbare, emulgierte Form gebracht werden können. Emulsionen auf Basis E-AS-Wachs und Paraffin oder Kombinationen von E-AS-Wachsen und Polyethylenoxydatemulsionen mit Paraffinen zeigen dagegen eine einwandfreie Bestädigkeit gegen kaltes Wasser. Die E-AS-Wachse mit etwa gleichem Acryläregehalt aber abnehmendem Molekulargewicht zeigen eine zunehmende der Entfernbarkeit mit heißem Wasser.

Die Herstellung der erfindundsgemäß zu verwendenden E-AS-Wachse erfolgt in an sich bekannter Weise durch kontinuierliche Hochdruckpolymerisation von Ethylen mit Acrylsäure in Gegenwart von radikalbildenden Initiatoren und kann beispielsweise folgendermaßen beschrieben werden:

Die Polymerisation findet bei Temperaturen von 150 bis 300°C und Drucken von 1000 bis 3000 bar statt. Das Gewichtsverhältnis Ethylen zu ungesättigter Carbonsäure liegt bei 300 : 1 bis 10 : 1. Im Ansatz sind, bezogen auf die Summe der Monomeren, bis zu 5 Gew.% an Reglern anwesend.

Als Regler werden die üblichen Substanzen, wie aliphatische Aldehyde mit 3 bis 6 C-Atomen, insbesondere Propionaldehyd oder n-Butyraldehyd, aliphatische Ketone mit 3 bis 6 C-Atomen, wie Aceton oder Methylethylketon, -Olefine mit 3 bis 6 C-Atomen, wie Propen, 1-Buten oder 1-Penten, oder $C_3$-$C_5$-Alkane, wie Propan, n-Butan oder n-Pentan, verwendet. Bevorzugt werden aliphatische Aldehyde, wie Propionaldehyd oder n-Butyraldehyd, eingesetzt.

Kontinuierlich werden 3 bis 25 Gew.% des Ethylens umgesetzt und das gebildete Polymerisat kontinuierlich aus der Reaktionszone entfernt. Die Polymerisation findet in einphasigem Polymerisationsmilieu statt, wobei das im überkritischen Zustand vorliegende Ethylen als Lösungsmittel für das Reaktionsgemisch und die Polymerschmelze dient.

Die Polymerisation erfolgt in der Regel mit Ethylenumsätzen von max. 25 %. Die Dosierung der Acrylsäure und der verwendeten radikalischen Polymerisationsstarter in das Reaktionsgemisch erfolgt getrennt. Die Dosierung der für die Einstellung des Molekulargewichts erforderlichen Regler kann zusammen mit den Comonomeren bzw. dem radikalischen Starter erfolgen.

Beispiele

Teile sind Gewichtsteile, soweit nicht anders angegeben.

Herstellung von E-AS-Wachsen

Beispiel 1

Eine Mischung von 298 kg/h Ethylen, 11,9 kg/h Acrylsäure und 5,56 kg/h Propionaldehyd mit einer Temperatur von 91°C wird kontinuierlich durch einen auf einem Druck von 2300 bar gehaltenen 10 1-Rührautoklaven geleitet. Durch die kontinuierliche Zugabe von 283,8 g/h t-butylperpivalat in einem Lösungsmittel wird die Temperatur im Autoklavenreaktor bei 219°C gehalten. Das nach Entspannung des Reaktionsgemisches in einer Menge von 42 kg/h anfallende Polymerisat entspricht einem Umsatz von 14,1 %, bezogen auf den Ethylendurchsatz. Es enthält 22,7 Gew.% Acrylsäure und hat einen MFI 125/325 von 500 bzw. eine Schmelzviskosität bei 120°C von 2600 mm²/s.

Die Beispiele 2 bis 7 wurden gemäß Beispiel 1 durchgeführt, die abweichenden Parameter können der Tabelle 1 entnommen werden.

Herstellung erfindungsgemäßer Wachsdispersionen

Beispiel I

a) In einem Rührkessel werden bei einem Oberdruck von 4 bis 6 bar und einer Temperatur von 140 bis 160°C 140 Teile eins E-AS-Wachses mit einem Acrylsäure-Anteil von 21,2% (entsprechend Beispiel 2), 25 Teile wäßrige Ammoniaklösung (25%ig) und 535 Teile Wasser unter Rühren erhitzt, bis nach ca. einer Stunde eine gleichmäßige Emulsion entstanden ist. Nach dem Abkühlen wird ein Trockenwert von 20 bis 21 %, ein pH-Wert von 9,6 und eine mittlere Teilchengröße von ca. 1μm ermittelt.

b) 50 Teile der unter a) erhaltenen Dispersion werden mit 9,5 Teilen Wasser verdünnt und 40 Teile geschmolzenes Paraffin von einem Schmelzbereich von 44 bis 46°C und 0,1 Teil Fluortensid als Verlaufsmittel werden bei 60 bis 70°C mit Hilfe eines Ultraturrax emulgiert und anschließend rasch abgekühlt. Man erhält eine rund 50 % Feststoff enthaltende Dispersion mit einer mittleren Teilchengröße von ca. 1,1 μm.

Die jeweils erhalten Dispersion wird direkt mit Hilfe einer Rakel auf frisch lackierte Prüfbleche in dünner Schicht aufgetragen. Durch kurzzeitiges, nur wenige Minuten dauerndes Bestrahlen mit einer Ultrarotlampe wird getrocknet und man erhält eine einwandfreie, geschlossene, wasserfeste Filmschicht, die das lackierte Metal gegen korrosive und andere negative Umwelteinflüsse schützt und mit Hilfe von heißem Druckwasser; nach der Entfernung sind die Lacke in einwandfreiem Zustand.

Die Beispiele II bis VII wurden analog Beispiel I hergestellt, abweichende Parameter können der Tabelle 2 entnommen werden. Auch die anwendungstechnischen Prüfergebnisse wurden in Tabelle 2 zusammengestellt. Beispiele VII -IX sind Vergleichsbeispiele.

Tabelle 1 Herstellung von E-AS-Wachsen

| Bei-spiel Nr. | Druck (bar) | T max. (°C) | T Ge-misch (°C) | Ethylen-Durchsatz (kg/h) | AS-Do-sierung (kg/h) | TBPPI-Do-sierung (g/h) | PA-Do-sierung (kg/h) | Ausstoß (kg/h) | Ethylen Umsatz (%) | AS-Ge-halt (Gew.%) | MFI 125/325 (g/10 min) | Schmelzvisko-sität (120°C) (mm$^2$/s) |
|---|---|---|---|---|---|---|---|---|---|---|---|---|
| 1 | 2300 | 219 | 91 | 298 | 11,9 | 283,8 | 5,56 | 42 | 14,1 | 22,7 | 500 | 2600 |
| 2 | 2300 | 220 | 96 | 284 | 10,3 | 182,1 | 0,58 | 38 | 13,4 | 21,2 | 3 | |
| 3 | 2300 | 220 | 91 | 314 | 11,3 | 155,0 | 1,46 | 43 | 13,7 | 20,0 | 16 | |
| 4 | 2300 | 219 | 92 | 293 | 10,3 | 197,6 | 1,62 | 39 | 13,3 | 19,0 | 40 | |
| 5 | 2300 | 218 | 90 | 295 | 11,1 | 209,2 | 3,47 | 41 | 13,9 | 21,8 | 92 | |
| 6 | 2300 | 219 | 92 | 285 | 11,1 | 210,4 | 4,50 | 39 | 13,7 | 21,1 | 190 | 12000 |
| 7 | 2300 | 215 | – | – | – | 290 | – | – | – | 15,0 | – | 2000 |

AS = Acrylsäure

TBPPI = t-Butylperpivalat

PA = Propionaldehyd

0 201 702

Tabelle 2    Anwendungstechnische Prüfung

| Dispersions-beispiel | Wachs gemäß Beispiel | Gew.% E-AS- | wäßrige Formulierung Amin | Gew.% Paraffin | Beständigkeit [1] gegen kaltes Wasser | Entfernbarkeit [2] mit Wasser v. 95°C |
|---|---|---|---|---|---|---|
| I | 2 | 10 | 100 Mol% $NH_3$ | 40 | sehr gut | 90–100 % |
| II | 3 | 10 | 92 Mol% DME | 40 | sehr gut | 90–100 % |
| III | 4 | ·15 | 100 Mol% $NH_3$ | 30 | sehr gut | 90–100 % |
| IV | 5 | 10 | 100 Mol% $NH_3$ | 40 | sehr gut | 90–100 % |
| V | 6 | 15 | 90 Mol% DEE | 40 | sehr gut | 90–100 % |
| VI | 1 | 10 | 100 Mol% $NH_3$ | 50 | sehr gut | 90–100 % |
| VII (Mischung Beisp. VI mit PE-Oxidat [3] und Paraffin) | | 5 ... 5 | 100 Mol% $NH_3$ ... PE-Oxidat | 40 | gut – sehr gut | ca. 100 % |
| VIII (wäßrige Paraffin-Emulsion mit Emulgator) | | – | | | ungenügend (wird anemulgiert) | ca. 100 % |
| IX (Emulsion PE-Oxidat [3] und Paraffin) | | 10 | PE-Oxidat | 40 | ungenügend (wird anemulgiert) | 90–95 % |

DME  = Dimethylethanolamin

DEE  = Diethylethanolamin

3)    = Emulsion von Polyethylenoxidat (PE-Oxidat), bestehend aus 27 Gew.% PE-Oxidat, 7 Gew.% $C_{10}$-Oxoalkohol mit 7 Mol Ethylenoxid und 0,5 Gew.% KOH und Rest zu 100 % Wasser

1) = getrocknete Filmoberfläche (Filmdicke 15-20 μm, wird für die Dauer von 30 Min einem Kaltwasserstrahl (20°C Wassertemperatur) ausgesetzt.

2) = Probe wird mit Wasser von 95°C kontinuierlich mit einem Schwämmchen 30mal über die getrocknete Filmoberfläche gebürstet. %-Angaben beziehen sich auf die abgelöste Menge nach der Behandlung.

Herstellung erfindungsgemäßer Wachsdispersionen speziell für galvanisierte Metalloberflächen

Beispiel X

In einem Rührkessel werden bei einem Überdruck von 4 bis 6 bar und einer Temperatur von 100 bis 160°C 100 Teile eines E-AS-Wachses mit einem Acrylsäure-Anteil von 21, 2% (entsprechend Beispiel 2), 14 Teile Dimethylethanolamin und 286 Teile Wasser unter Rühren erhitzt, bis nach ca. zwei Stunden eine gleichmäßige Emulsion entstanden ist. Nach dem Abkühlen werden ein Trockenwert von 28, 5%, ein pH-Wert von 8,5 und eine mittlere Teilchengröße von ca. 1 μm ermittelt.

Die erhaltene Dispersion wird durch Verdünnen mit Wasser auf 15% Trockengehalt eingestellt und direkt durch Tauchen auf ein galvanisiertes Prüfblech aufgetragen. Im Trockenschrank wird bei 60°C getrocknet und man erhält eine einwandfreie, geschlossene, wasserfeste Filmschicht, die den Träger gegen korrosive und andere negative Umwelteinflüsse schützt.

Die Beispiele XI bis XIV wurden analog Beispiel X hergestellt, abweichende Parameter können der Tabelle 2 entnommen werden. Auch die anwendungstechnischen Prüfergebnisse wurden in Tabelle 3 zusammengestellt.

Tabelle 3 Anwendungstechnische Prüfung

| Beispiel | Wachs gemäß Beispiel | Amin/ Neutr.grad Mol.% | Schicht- dicke µm | getrocknet bei °C | Salzsprühtest DIN 53 167 Stunden | Beurteilung |
|---|---|---|---|---|---|---|
| X | 2 | DMEA/100 | 3 | 60 | 240 | 1, klar |
| XI | 3 | DMEA/100 | 3 | 60 | 240 | 2, klar |
| XII | 1 | DEEA/100 | 5 | 60 | 240 | 2, matt |
| XIII | 2 | TEA/100 | 3 | 60 | 240 | 1, klar |
| XIV | 7 | DMEA/100 | 2 | 60 | 240 | 2, klar |
|  | Vergleich: |  |  |  |  |  |
| XV | AS/AN-Copolymer (Handelsprodukt) | | 3 | 120 | 240 | 2, klar |
| XVI | Alkydharz auf Basis Phthalsäure- ester (Handelsprodukt) | | 3 | 60 | 240 | 2, klar |
| XVII | Rohblech verzinkt | | – | – | 160 | 3 |

DMEA = Dimethylethanolamin
DEEA = Diethylethanolamin
TEA = Triethanolamin
AS/AN = Acrylsäure/Acrylnitril

Beurteilung:
1 = kaum Angriff
2 = leichter Angriff
3 = starker Angriff

**Ansprüche**

1. Flüssiges Konservierungsmittel für Metall-und Lackoberflächen in Form von wäßrigen Wachsdispersioen, dadurch gekennzeichnet, daß die wäßrigen Wachsdispersionen 10 bis 30 Gew. -% eines Ethylen-Acrylsäure-Copolymerisatwachses, bestehend aus 8 bis 25 gew.-% Acrylsäure-und 92 bis 75 Gew.-% Ethyleneinheiten, bezogen auf die Säureform des Wachses, und Rest zu 100 Gew.-% Wasser enthalten, wobei des Ethylen--Acrylsäure-Copolymerisatwachs in der Säureform eine Schmelzviskosität von wenigstens 1000 mm²/s, gemessen bei 120°C, als untere Grenze und einem MFI-Wert von wenigstens 1, gemessen bei 125°C und 325 g, als obere Grenze aufweist und die Carboxylgruppen des Ethylen-Acrylsäure-Copolymerisatwachses zu 50 bis 100 Mol% neutralisiert sind.

2. Flüssiges Konservierungsmittel nach Anspruch 1, dadurch gekennzeichnet, daß das Ethylen-Acrylsäure-Copolymerisatwachs aus 12 bis 22 Gew.-% Acrylsäure und 88 bis 78 Gew.-% Ethylen besteht.

3. Flüssiges Konservierungsmittel nach Anspruch 1 oder 2, dadurch gekennzeichnet , daß 65 bis 100 Mol% der Carboxylgruppen neutralisiert sind.

4. Flüssiges Konservierungsmittel nach einem der Ansprüche 1 bis 3, dadurch gekennzeichnet, daß das Ethylen-Acrylsäure-Copolymerisatwachs eine Schmelzviskosität von 2000 mm²/s als untere Grenze und einen MFI-Wert von wenigstens 10 als obere Grenze aufweist.

5. Flüssiges Konservierungsmittel nach einem der Ansprüche 1 bis 4, dadurch gekennzeichnet, daß der Wachsdispersion, bezogen auf das Gesamtgewicht, zusätzlich 0,1 bis 5 gew.-% an sich übliche Hilfsmittel außer Emulgatoren zugesetzt sind.

6. Flüssiges Konservierungsmittel nach einem der Ansprüche 1 bis 5, dadurch gekennzeichnet, daß die wäßrige Wachsdispersion, bezogen auf ihr Gewicht, 15 bis 25 Gew.-% einer Emulsion eines Polyethylenoxidatwachses, bestehend aus 20 bis 27 Gew.-% eines Polyethylenoxidatwachses mit einer Säurezahl von 18 bis 25 und einem Molekulargewicht von 2000 bis 10 000, 0,5 bis 0,8 Gew.-% Alkalihydroxid und Rest zu 100 Gew.-% Wasser, enthält, mit der Maßgabe, daß die Gesamtdispersion einen Feststoffgehalt von 10 bis 35 Gew.-% aufweist.

7. Flüssiges Konservierungsmittel nach einem der Ansprüche 1 bis 5, dadurch gekennzeichnet, daß die wäßrige Wachsdispersion, bezogen auf ihr Gesamtgewicht, 40 bis 80 Gew.-% eines Polyethylenwachses mit einem Molgewicht von 500 bis 6000 und einem Schmelzpunkt von 40 bis 110°C oder ein Paraffin mit einem Schmelzpunkt von 40 bis 100°C enthält, mit der Maßgabe, daß die Gesamtdispersion ein Feststoffgehalt von 30 bis 65 Gew.-% aufweist.

8. Flüssiges Konservierungsmittel nach einem der Ansprüche 1 bis 5, dadurch gekennzeichnet, daß die wäßrige Wachsdispersion, bezogen auf ihr Gewicht, 25 bis 100 Gew.% einer Emulsion eines Polyethylenoxydatwachses, bestehend aus 20 bis 27 Gew.% eines Polyethylenoxydatwachses mit einer Säurezahl von 18 bis 25 und einem Molekulargewicht von 2000 bis 10 000, 0,5 bis 0,8 Gew.% Alkalihydroxid, 2,5 bis 2,8 Gew.% eines nichtionischen Emulgators und Rest zu 100 Gew.% Wasser, und 15 bis 200 Gew.% eines synthetischen oder natürlichen Kohlenwasserstoffwachses enthält, mit der Maßgabe, daß die Gesamtdispersion einen Feststoffgehalt von 30 bis 65 Gew.% aufweist.

9. Verwendung eines Ethylen-Acrylsäure-Copolymerisatwachses, bestehend aus 8 bis 25 Gew.-% Acrylsäure-und 92 bis 75 Gew.-% Ethyleneinheiten, das in der Säureform eine Schmelzviskosität von wenigstens 1000 mm²/s, gemessen bei 120°C, als untere Grenze und einen MFI-Wert von wenigstens 1, gemessen bei 125°C und 325 g, als obere Grenze aufweist, als flüssiges Konservierungsmittel für Metall-und Lackoberflächen in Form einer wäßrigen Wachsdispersion gemäß einem der Ansprüche 1 bis 8.

10. Verwendung eines Ethylen-Acrylsäure-Copolymerisatwachses, bestehend aus 8 bis 25 Gew.-% Acrylsäure-und 92 bis 75 Gew.-% Ethyleneinheiten, das in der Säureform eine Schmelzviskosität von wenigstens 1000 mm²/s, gemessen bei 120°C, als untere Grenze und einen MFI-Wert von wenigstens 1, gemessen bei 125°C und 325 g, als obere Grenze aufweist, als flüssiges Konservierungsmittel für galvanisierte Metalloberflächen in Form einer wäßrigen Wachdispersion gemäß einem der Ansprüche 1 bis 5.

11. Verfahren zum temporären Konservieren von Metall-und Lackoberflächen, dadurch gekennzeichnet, daß man auf die Metall-oder Lackoberflächen eine wäßrige Wachsdispersion gemäß einem der Ansprüche 1 bis 8 aufbringt und trocknet.

12. Verfahren zum Konservieren von galvanisierten Metalloberflächen, dadurch gekennzeichnet, daß man auf die galvanisierte Metalloberfläche eine wäßrige Wachdispersion gemäß einem der Ansprüche 1 bis 5 aufbringt und bei 30 bis 60°C trocknet.